# EUROPÄISCHE PATENTSCHRIFT

(11) **EP 0 659 615 B1**
(45) Veröffentlichungstag und Bekanntmachung des Hinweises auf die Patenterteilung: **12.03.1997**
(21) Anmeldenummer: 94119275.9
(22) Anmeldetag: 07.12.1994
(51) Int. Cl.: B60R 21/09, B60T 7/06

(54) **Pedalwerk für ein Fahrzeug**
Pedal arrangement for a vehicle
Agencement d'une pédale pour un véhicule

(30) Priorität: 24.12.1993 DE 4344386
(43) Veröffentlichungstag der Anmeldung: 28.06.1995
(73) Patentinhaber: ADAM OPEL AG, 65423 Rüsselsheim (DE)
(72) Erfinder: Arnold, Johann, D-64319 Pfungstadt (DE); Hubbert, Heinz-Jürgen, Dipl.-Ing., D-65428 Rüsselsheim (DE)
(74) Vertreter: Kümpfel, Heinz, Dipl.-Ing.

(56) Entgegenhaltungen:
- DE-A- 3 904 616
- DE-A- 4 013 284
- DE-A- 4 305 290

## Beschreibung

Die Erfindung betrifft ein Pedalwerk für ein Fahrzeug, insbesondere ein Brems- oder Kupplungspedalwerk für ein Kraftfahrzeug, mit einer Pedalstrebe, die zwei beabstandet zueinander angeordnete Strebenschenkel sowie zwischen den beiden Strebenschenkein ein schwenkbar gelagertes Pedal aufweist, an dem beabstandet zur Pedalschwenkachse ein Betätigungselement für ein vom Pedal zu beaufschlagendes Element, insbesondere Brems- oder Kupplungselement angreift, wobei eine Pedalachse mit ihren beiden Enden in zur Pedalachse hin offene Achslager eingesetzt ist und die Pedalstrebe im Bereich ihrer beiden Enden mit Aufnahmen zum Befestigen des Pedalwerks zwischen stationären Bauteilen des Fahrzeuges versehen ist.

Ein Pedalwerk der genannten Art ist aus der DE 40 13 284 A1 bekannt. Dort ist die Pedalstrebe als starre Einheit ausgebildet, indem Flanschlappen der beiden Strebenschenkel in derem Überlappungsbereich beabstandet zu den stationären Bauteilen miteinander verschweißt sind. Die unlösbare Verbindung der Pedalstrebe stellt sicher, daß das Pedalwerk nicht demontiert werden kann, ohne dessen sicherheitsrelevante Teile zerstören zu müssen. Eine Zerstörung jedoch wird ohne weiteres von außen erkannt.

Bei einem Aufprallunfall werden Aufprallkräfte auch in das Pedalwerk des Fahrzeuges eingeleitet. Dies einerseits über, auf den normalen Fahrbetrieb bezogen, stationäre Bauteile des Fahrzeuges, beispielsweise eine Stirnwand und eine Lenksäule, an denen das Pedalwerk befestigt ist, andererseits über das mit dem Pedal zusammenwirkende Betätigungselement, das über seine Anlenkung beabstandet zur Pedalachse ein Schwenkmoment in das Pedal entgegen seiner Betätigungsrichtung einleitet, was erhebliche Fußverletzungen bei dem das Pedal betätigenden Fahrer bedingen kann.

Es ist Aufgabe der vorliegenden Erfindung, ein Pedalwerk der eingangs genannten Art so weiter zu bilden, daß bei einem Aufprallunfall eine Gesundheitsgefährdung des Fahrers durch eine Verlagerung des Pedals Weitgehend ausgeschlossen ist.

Gelöst wird die Aufgabe dadurch, daß jeder Strebenschenkel einen Umformbereich aufweist, wobei die mit dem Strebenschenkeln verbundenen Achslager, beim Überschreiten einer über mindestens eines der stationären Bauteile in die Pedalstrebe eingeleiteten Kraft, außer Eingriff mit der Pedalachse gelangen.

Wesentlich ist bei der vorliegenden Erfindung, daß beim Aufprallunfall infolge der auf die Pedalstrebe einwirkenden Kräfte die beiden Strebenschenkel voneinander wegbewegt werden, so daß wegen des vergrößerten Abstandes der beiden Achslager die Pedalachse außer Eingriff mit diesen gelangt und sich das Pedal mit der Pedalachse von der Pedalstrebe lösen kann. Dies ist deshalb möglich, weil jeder Strebenschenkel einen Umformbereich aufweist, so daß die jeweilige Strebe bei Einleitung einer solchen Kraft, die nur bei einem Unfallgeschehen auftritt, einer Formveränderung im Sinne einer Aufstauchung der Pedalstrebe unterliegt. Der Stauchvorgang kann beispielsweise durch Auseinanderbiegen der Strebenschenkel erfolgen. Es wird allerdings als bevorzugt angesehen, wenn jeder Strebenschenkel mehrere Sollknickstellen aufweist, die insbesondere beidseitig des zugeordneten Achslagers angeordneten sein sollten. Dies bedingt ein definiertes Abknicken der Strebenschenkel beim Unfallgeschehen, womit auf besonders einfache Art und Weise gewährleistet ist, daß sich die Pedalachse des Pedales sicher aus den beiden Achslagern herausbewegt. Das Lösen des Pedales von der Pedalstrebe bedingt, daß über das Betätigungselement keine Momente mehr in das Pedal eingeleitet werden können, es damit frei beweglich im Fußraum des Fahrzeuges mit dem Betätigungselement verbunden ist und die Einleitung von Kräften über das Pedal in den Fuß des Fahrers weitgehend ausgeschlossen und damit die Verletzungsgefahr durch das Pedal weitgehend eliminiert ist.

Vorteilhaft weist jeder Strebenschenkel im Bereich seines Achslagers seinen Umformbereich auf. Es wird damit der jeweilige Strebenschenkel beim Unfallgeschehen in demjenigen Bereich verformt, in dem das Achslager angeordnet ist. Dies erleichtert es, die Verformstrecke des jeweiligen Strebenschenkels relativ zur Längserstreckung der Pedalachse besonders einfach zu ermitteln.

Es ist insbesondere vorgesehen, daß der Umformbereich jedes Strebenschenkels als freie Biegelinie oder freie Knicklinie ausgebildet ist. Dies bedeutet, daß der jeweilige Strebenschenkel im Umformbereich mit keinem anderen Bauteil, insbesondere nicht min dem anderen Strebenschenkel verbunden ist. Grundsätzlich wäre dies aber auch möglich, beispielsweise indem im Umformbereich mit einem der Strebenschenkel ein Ende eines plattenförmigen Elementes fest verbunden ist, dessen anderes Ende reibschlüssig am anderen Strebenschenkel befestigt ist. Während die feste Verbindung beispielsweise dadurch gestaltet sein kann, daß der Strebenschenkel mit dem plattenförmigen Element ein Bauteil bildet, erfolgt die reibschlüssige Verbindung mit dem anderen Strebenschenkel bevorzugt dadurch, daß das Ende des plattenförmigen Elementes mit dem anderen Strebenschenkel verklemmt ist. Bei einem Aufprallunfall bewirken die in die Pedalstrebe eingeleiteten hohen Kräfte, daß die in die Strebenschenkel eingeleiteten, voneinander weggerichteten Kräfte einerseits die Reibkräfte zwischen dem plattenförmigen Element und dem anderen Strebenschenkel überwinden, womit diese Verbindung aufgehoben wird und überdies die Kräfte die Pedalstrebe im erfindungsgemäßen Sinne umformen, so daß das Pedal aus der Pedalstrebe herausfällt.

Gemäß einer besonderen Ausführungsform der vorliegenden Erfindung ist der jeweilige Strebenschenkel als plattenförmiges Bauteil ausgebildet. Er weist damit auf die Umformrichtung bezogen ein relativ geringes Biegewiderstandsmoment auf.

Um zu der erfindungsgemäßen Wirkungsweise des Pedalwerkes zu gelangen, ist es grundsätzlich ausreichend, wenn die beiden Strebenschenkel nicht miteinander verbunden sind, sondern mit ihren diametralen Enden unmittelbar zwischen den stationären Bauteilen des Fahrzeuges angeordnet sind. Bereits bei einer solchen Gestaltung würde die Einleitung einer Kraft in eines der im normalen Fahrbetrieb des Fahrzeuges stationären Bauteile zu einer Ortsverlagerung dieses Bauteiles relativ zum anderen stationären Bauteil führen, womit sich die Pedalstrebe wegen der sich annähernden Bauteile im erfindungsgemäßen Sinne umformt. Aus Montagegründen, sowohl hinsichtlich der Montage des Pedalwerkes als auch der Montage des Pedalwerkes zwischen den stationären Bauteilen des Fahrzeuges, sollten die beiden Strebenschenkel im Bereich eines Endes der Pedalstrebe miteinander verbunden sein. Diese Verbindung erfolgt, nachdem die Pedalachse mit dem Pedal zwischen die beiden Strebenschenkel eingelegt ist, durch Verschweißen der beiden Strebenschenkel. Damit die Pedalstrebe nicht zu breit baut, sollten die beiden Strebenschenkel benachbart zu deren Verbindungsbereich einen spitzen Winkel miteinander einschließen.

Es ist insbesondere daran gedacht, daß ein Ende der Pedalstrebe mit einem die Funktion eines Systemträgers aufweisenden stationären Bauteil und das, bevorzugt diametrale andere Ende der Pedalstrebe mit einem die Funktion einer festen Wandung aufweisenden stationären Bauteil verbindbar ist. Der Systemträger kann dabei als Querträger ausgebildet sein, der der Befestigung einer Lenksäule oder eines Lenkungsträgers dient. Bevorzugt sind die beiden miteinander verbundenen Strebenschenkel mit dem stationären Bauteil verbunden und das andere Ende der Pedalstrebe mit der festen Wandung des Fahrzeuges.

Eine besondere Ausbildung des Pedallagers sieht vor, daß das jeweilige Achslager als mit einem den Strebenschenkel verbundener, rotationssymmetrischer Ansatz ausgebildet ist und die als Hülse ausgebildete Pedalachse auf die Achslager aufgesteckt ist, sowie das Pedal mit der Pedalachse drehfest verbunden ist. Das Pedal und die Pedalachse stellen sich damit als ein Bauteil dar, das besonders einfach in der Pedalstrebe montiert werden kann. Bevorzugt wird das Pedal hängend angeordnet, es ist aber grundsätzlich jegliche Pedallagerung möglich, somit auch eine stehende.

Weitere Merkmale der Erfindung sind in den Figuren, der Beschreibung der Figuren und in den Unteransprüchen dargestellt, wobei bemerkt wird, daß alle Einzelmerkmale und alle Kombinationen von Einzelmerkmalen erfindungswesentlich sind.

In den Figuren ist die Erfindung anhand zweier Ausführungsformen beispielsweise dargestellt, ohne auf diese beschränkt zu sein. Es zeigt:
- Figur 1: für eine erste Ausführungsform des erfindungsgemäßen Pedalwerkes dessen Seitenansicht,
- Figur 2: einen Schnitt durch die Pedalstrebe des Pedalwerks, gemäß der Linie B-B in Figur 1,
- Figur 3: einen Schnitt durch das Pedalwerk gemäß der Linie A-A in Figur 1,
- Figur 4: eine Ansicht eines zweiten Ausführungsbeispieles des erfindungsgemäßen Pedalwerks, von unten (von der Pedalplatte) aus gesehen und
- Figur 5: das Pedalwerk in der Ausführungsform nach Figur 4, in einer Unteransicht, nach dessen Verformung bei einem Aufprallunfall verdeutlicht.

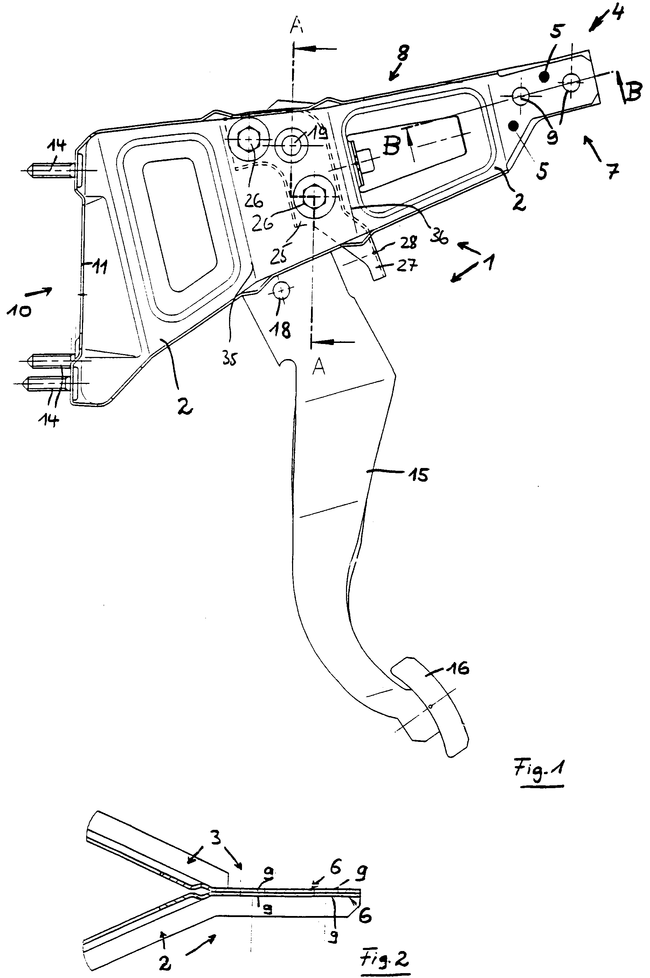

Bei der Ausführungsform nach den Figuren 1 bis 3 ist mit der Bezugsziffer 1 das Pedalwerk bezeichnet. Es weist zwei als Blechpreßteile ausgebildete, im wesentlichen plattenförmige Strebenschenkel 2 und 3 auf. Jeder Strebenschenkel 2 bzw. 3 ist, im Sinne der Figur 1 betrachtet, annähernd dreieckförmig ausgebildet und im Bereich derjenigen Dreieckspitze, die die beiden langen Seiten des Dreiecks zwischen sich einschließt, mit dem anderen Strebenschenkel im Bereich der beiden Schweißpunkte 5 miteinander verschweißt. Wie insbesondere der Darstellung der Figur 2 zu entnehmen ist, liegen hierzu die Endbereiche 6 der Strebenschenkel 2 und 3 flach aneinander und es erstrecken sich von dort die beiden Strebenschenkel 2 und 3 unter einem spitzen Winkel von etwa 50°. Im Bereich des den Dreieckspitzen 4 der Strebenschenkel 2 und 3 zugeordneten Endes 7 der durch die beiden Strebenschenkel 2 und 3 gebildeten Pedalstrebe 8, sind zwei das Ende 7 durchsetzende Bohrungen 9 vorgesehen, die der Befestigung der Pedalstrebe 8 im Bereich dieses Endes mit einem nicht gezeigten Querträger zur Befestigung einer Lenksäule dienen. Das diametral zum Ende 7 befindliche Ende 10 der Pedalstrebe 8 dient deren Befestigung an einer nicht verdeutlichten vorderen Stirnwand eines Kraftfahrzeuges. Hierzu weist jeder Strebenschenkel 2 bzw. 3 im Bereich des Endes 10 einen senkrecht zur allgemeinen Strebenschenkelorientierung angeordneten Flanschansatz 11 bzw. 12 auf, wobei jeder der Flanschansätze 11 bzw. 12 mit zwei Bohrungen 13 versehen ist. Die Befestigung dieses Endes 10 der Pedalstrebe 8 erfolgt über durch die Bohrungen 13 gesteckte Schrauben 14 an der Stirnwand.

Zwischen den beiden Strebenschenkeln 2 und 3 ist ein Pedal 15 mit im Bereich seines unteren Endes angeordneter Pedalplatte 16 um dessen geometrische Schwenkachse 17 schwenkbar gelagert. Beabstandet zur Schwenkachse 17 weist das Pedal 15 eine Bohrung 18 auf, im Bereich derer eine nicht gezeigte Betätigungsstange schwenkbar verbunden ist, die dem Betätigen einer Bremse oder einer Kupplung dient.

Gelagert ist das Pedal 15 in der Pedalstrebe 8 mittels einer hülsenförmigen Pedalachse 19. Diese durchsetzt eine Bohrung im Bereich des oberen Endes des Pedales 15, wobei eine drehfeste Verbindung zwischen Pedal 15 und Pedalachse 19 durch zwei umlaufende Stauchwülste 20 und 21 der Pedalachse 19 sichergestellt wird, die das rechteckigen Querschnitt aufweisende Pedal 15 zwischen sich klemmen. Die Pedalachse 19 wird im Bereich jedes ihrer beiden freien Enden von einem zur Pedalachse 19 hin offenen Achslager 22 und 23 schwenkbar aufgenommen, in das die Pedalachse 19 mit dem zugeordneten Ende eingesetzt ist. Die Achslager 22 bzw. 23 sind als aus dem Strebenschenkel 2 bzw. 3 ausgebogene Hülsen ausgebildet, deren Außendurchmesser geringer ist als der Innendurchmesser der Pedalachse 19. Zwischen das jeweilige Achslager 22 bzw. 23 und das zugeordnete Ende der Pedalachse 19 ist ein Gleitelement 24 mit im wesentlichen U-förmigen Querschnitt eingelegt, derart, daß das Gleitelement 24 das zugeordnete freie Ende der Pedalachse 19 umschließt und mit der Innenkontur seines inneren Schenkels an der Außenkontur des zugeordneten Achslagers 22 bzw. 23 anliegt. Montiert wird die Pedalstrebe 8, indem das mit der Pedalachse 19 verbundene Pedal 15 in die Achslager 22 und 23 der Strebenschenkel 2 und 3 eingesetzt und dann die beiden Strebenschenkel 2 und 3 im Bereich der Dreieckspitze 4 miteinander verschweißt werden.

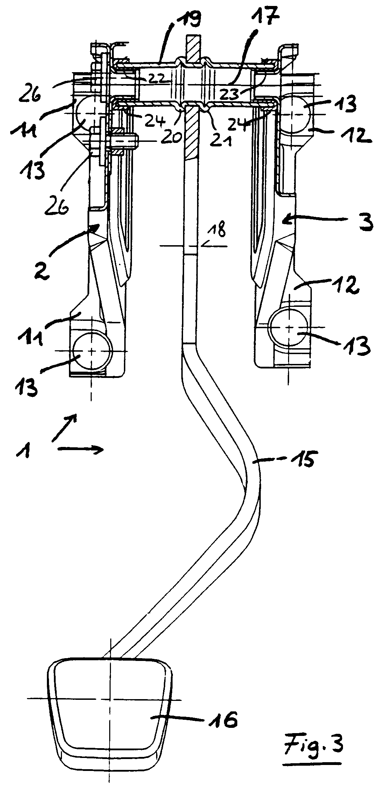

Wie der Darstellung der Figuren 1 und 2 zu entnehmen ist, ist mit dem Strebenschenkel 2 im Bereich der Pedalachse 19 eine Lagerplatte 25 mittels Zweier Schrauben 26 verschraubt. Ein Ansatz 27 der Lagerplatte 25 erstreckt sich hinter dem Pedal 15 und dient im Bereich der angedeuteten Mittellinie 28 der Aufnahme eines nicht gezeigten Anschlages, der die Rückstellbewegung des Pedales 15, die unter Einwirkung einer nicht gezeigten Feder erfolgt, begrenzt. Im Ansatz 27 kann zusätzlich ein Schalter angeordnet sein, der beim Betätigen des Pedales 15 aktiviert wird und ein Signal an ein Bremslicht weitergibt. Aus Gründen zeichnerischer Klarheit ist der Ansatz 27 in Figur 3 nicht verdeutlicht.

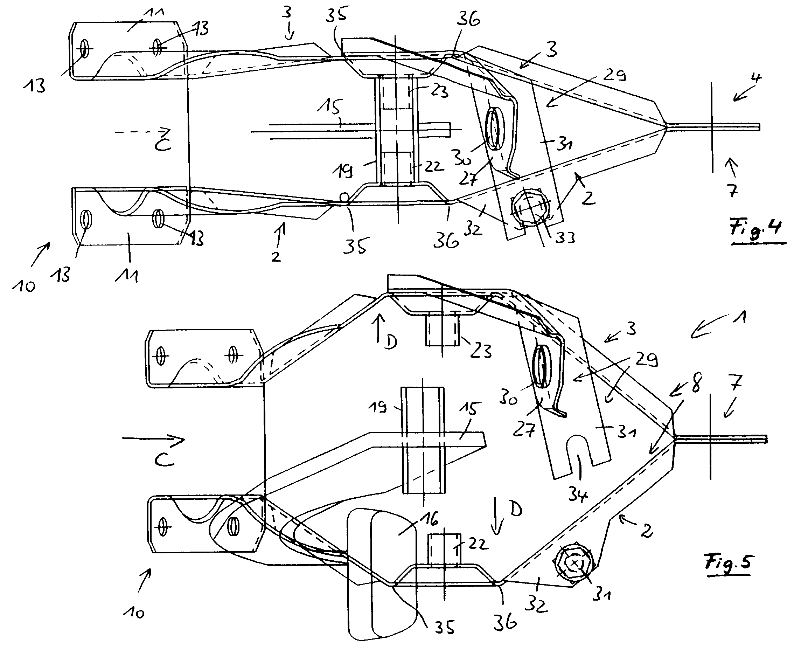

Bei der Ausführungsform nach den Figuren 4 und 5 mit der zuvor beschriebenen Ausführungsform in ihrer Funktion übereinstimmende Bauteile sind der Einfachheit halber mit denselben Bezugsziffern bezeichnet. Die Variante nach den Figuren 4 und 5 unterscheidet sich von der erstgenannten durch eine besondere Anbindung der beiden Strebenschenkel 2 und 3. Wie der Figur 4 zu entnehmen ist, ist im Bereich des Achslagers 23 des Strebenschenkels 3 ein plattenförmiges, zweischenkliges Element 29 mit dem Strebenschenkel 3 verschweißt, dessen einer Schenkel als Ansatz 27 mit Anschlag 30 für das Pedal 15 hinter das Pedal geführt ist, während der andere Schenkel 31 in Richtung des Strebenschenkels 2 abgekröpft ist und das freie Ende dieses Schenkels 31 die Form eines U aufweist. Benachbart zum Achslager 22 weist der Strebenschenkel 2 im Bereich seines umlaufenden, parallel zum Schenkel 31 orientierten Randes 32 eine Gewindebohrung auf, wobei eine Schraube 33 eine im Bereich des freien Endes des Schenkels 31 gebildete Aussparung 34 durchsetzt und in die Gewindebohrung des Strebenschenkels 2 eingeschraubt ist, so daß die Schraube den Schenkel 31 mit dem Rand 32 verbindet.

Wesentlich ist bei den beiden beschriebenen Ausführungsformen, daß dort das Pedal 15 auf die Achslager 22 und 23 aufgesteckt ist, sowie jeder Strebenschenkel 2 bzw. 3 einen Umformbereich zwischen den beiden Enden 7 und 10 der Pedalstrebe 8 aufweist, der bei einem Aufprallunfall im Sinne einer Einwirkung gemäß Pfeil C nach Figur 5 zu einem Ausbeulen der Pedalstrebe 8 im Sinne der Pfeile D zwischen den beiden Enden 7 und 10 führt, mit der Folge, daß die Achslager 22 und 23 außer Eingriff mit der Pedalachse 19 gelangen und infolgedessen das Pedal 15 aus der Achshaltung fällt. Die alleinige Wirkverbindung zum Pedal 15 erfolgt somit über das im Bereich der Bohrung 18 auf das Pedal 15 einwirkende Betätigungselement. Bei beiden Ausführungsformen ist die Umformung der nach außen, das heißt, von einander weg gewölbten Strebenschenkel 2 und 3 auf den Bereich der Pedalachse 19 konzentriert, indem jeder Strebenschenkel 2 bzw. 3 beidseitig der Pedalachse 19 Knicklinien 35 und 36 aufweist. Diese bewirken beim Überschreiten einer vorberechneten Kraft bei einem Unfallereignis in Sollknickbereichen die Formveränderung der Strebenschenkel 2 und 3, somit in einem Bereich der Pedalstreben 8, in der das Pedal 15 gelagert ist und in dem es darauf ankommt, eine definierte Bewegung der Strebenschenkel 2 und 3 voneinander weg zu erzeugen, so daß das bis dahin in der Pedalstrebe 8 gelagerte Pedal 15 aus seiner Lagerung herausfallen kann.

Bei der Ausführungsform nach den Figuren 1 bis 3 gibt die Pedalstrebe 8 zwischen ihren beiden Enden 7 und 10 die freie Knicklänge vor, während bei der Ausführungsform nach den Figuren 4 und 5 zunächst ein Teil der beim Aufprall in das Pedalwerk 1 eingeleiteten Kräfte dazu benötigt wird, die Verbindung der beiden Strebenschenkel 2 und 3 mittels des Schenkels 31 zu lösen, in dem die Reibschlußkräfte zwischen Schraube 33, Schenkel 31 und Rand 32 überschritten werden, bevor sich die volle Länge zwischen den beiden Enden 7 und 10 der Pedalstrebe 8 als freie Knicklänge darstellt. Die letztgenannte Ausführungsform hat den Vorteil, daß die Pedalstrebe 8 im Normalfall besonders stabil, insbesondere verwindungssteif baut. Aber nach Aufheben der Reibschlußverbindung bei einem Unfallgeschehen wird, genauso wie bei der Ausführungsform nach den Figuren 1 bis 3, die Lagerung des Pedals 15 der Pedalstrebe 8 sicher aufgehoben.

## Patentansprüche

1. Pedalwerk für ein Fahrzeug, insbesondere ein Brems- oder Kupplungspedalwerk für ein Kraftfahrzeug, mit einer Pedalstrebe (8), die zwei beabstandet zueinander angeordnete Strebenschenkel (23) sowie zwischen den beiden Strebenschenkeln ein schwenkbar gelagertes Pedal (15) aufweist, an dem beabstandet zur Pedalschwenkachse (19) ein Betätigungselement für ein vom Pedal zu beaufschlagendes Element, insbesondere Brems- oder Kupplungselement angreift, wobei eine Pedalachse (19) mit ihren beiden Enden (7, 10) in zur Pedalachse hin offene Achslager (22, 23) eingesetzt ist und die Pedalstrebe im Bereich ihrer beiden Enden (7, 10) mit Aufnahmen zum Befestigen des Pedalwerks zwischen stationären Bauteilen des Fahrzeuges versehen ist, **dadurch gekennzeichnet**, daß jeder Strebenschenkel (2, 3) einen Umformbereich aufweist, wobei die mit den Strebenschenkeln (2, 3) verbundenen Achslager (22, 23) beim Überschreiten einer über mindestens eines der stationären Bauteile in die Pedalstrebe (8) eingeleiteten Kraft außer Eingriff mit der Pedalachse (19) gelangen.

2. Pedalwerk nach Anspruch 1, **dadurch gekennzeichnet**, daß jeder Strebenschenkel (2, 3) im Bereich seines Achslagers (22, 23) den Umformbereich aufweist.

3. Pedalwerk nach Anspruch 1 oder 2, **dadurch gekennzeichnet**, daß der Umformbereich jedes Strebenschenkels (2, 3) als freie Biegelänge oder freie Knicklänge ausgebildet ist.

4. Pedalwerk nach Anspruch 3, **dadurch gekennzeichnet**, daß jeder Strebenschenkel (2, 3) mehrere Sollknickstellen (35, 36) aufweist, die insbesondere beidseitig des zugeordneten Achslagers (22, 23) angeordnet sind.

5. Pedalwerk nach einem der Ansprüche 1 bis 4, **dadurch gekennzeichnet**, daß der jeweilige Strebenschenkel (2, 3) als plattenförmiges Bauteil ausgebildet ist.

6. Pedalwerk nach Anspruch 5, **dadurch gekennzeichnet**, daß die plattenförmigen Strebenschenkel (2, 3) zwischen sich die Pedalachse (19) aufnehmen, wobei der jeweilige Strebenschenkel (2, 3) im Bereich des diesen zugewandten Achslagers (22, 23) vom anderen Strebenschenkel (3, 2) weg gekrümmt ist.

7. Pedalwerk nach einem der Ansprüche 1 bis 6, **dadurch gekennzeichnet**, daß die beiden Strebenschenkel (2, 3) im Bereich eines Endes (7) der Pedalstrebe (8) miteinander verbunden sind.

8. Pedalwerk nach Anspruch 7, **dadurch gekennzeichnet**, daß die beiden Strebenschenkel (2, 3) benachbart zu deren Verbindungsbereich (7) einen spitzen Winkel miteinander einschließen.

9. Pedalwerk nach einem der Ansprüche 1 bis 8, **dadurch gekennzeichnet**, daß ein Ende (7) der Pedalstrebe (8) mit einem, die Funktion eines Systemträgers aufweisenden stationären Bauteil und das andere Ende (10) der Pedalstrebe (8) mit einem, die Funktion einer festen Wandung aufweisenden stationären Bauteil verbindbar ist.

10. Pedalwerk nach einem der Ansprüche 1 bis 9, **dadurch gekennzeichnet**, daß das jeweilige Achslager (22, 23) als mit einem der Strebenschenkel (2, 3) verbundener rotationssymmetrischer Ansatz ausgebildet ist und die als Hülse ausgebildete Pedalachse (19) auf die Achslager (22, 23) aufgesteckt ist, sowie das Pedal (15) mit der Pedalachse (19) drehfest verbunden ist.

11. Pedalwerk nach einem der Ansprüche 1 bis 10, **dadurch gekennzeichnet**, daß das Pedal (15) hängend angeordnet ist.

12. Pedalwerk nach einem der Ansprüche 1 bis 11, **dadurch gekennzeichnet**, daß im Umformbereich mit einem (3) der Strebenschenkel (2, 3) ein Ende eines plattenförmigen Elementes (31) fest verbunden ist, dessen anderes Ende reibschlüssig am anderen Strebenschenkel (2) befestigt ist.

## Claims

1. Pedal mechanism for a vehicle, in particular a brake or clutch pedal mechanism for a motor vehicle, with a pedal strut (8) comprising two spaced-apart strut arms (23) as well as, between the two strut arms, a pivotably mounted pedal (15) which is engaged, at a distance from the pivot shaft (19) of the pedal, by an actuating element for an element to be acted upon by the pedal, in particular brake or clutch element, wherein a pedal shaft (19) with both ends (7, 10) is inserted in journal bearings (22, 23) opening towards the pedal shaft, and the pedal strut in the region of its two ends (7, 10) is provided with receptacles for fixing the pedal mechanism between stationary components of the vehicle, characterised in that each strut arm (2, 3) comprises a shaped region, wherein the journal bearings (22, 23) connected to the strut arms (2, 3) become disengaged from the pedal shaft (19) on exceeding a force applied to the pedal strut (8) via at least one of the stationary components.

2. Pedal mechanism according to claim 1, characterised in that each strut arm (2, 3) in the region of its journal bearing (22, 23) comprises the shaped region.

3. Pedal mechanism according to claim 1 or 2, characterised in that the shaped region of each strut arm (2, 3) is designed as a free bent length or free buckled length.

4. Pedal mechanism according to claim 3, characterised in that each strut arm (2, 3) comprises several predetermined bend points (35, 36) which are arranged in particular on both sides of the associated journal bearing (22, 23).

5. Pedal mechanism according to any of claims 1 to 4, characterised in that the respective strut arm (2, 3) is designed as a plate-shaped component.

6. Pedal mechanism according to claim 5, characterised in that the plate-shaped strut arms (2, 3) receive between them the pedal shaft (19), wherein the respective strut arm (2, 3) in the region of the journal bearing (22, 23) facing towards them is curved away from the other strut arm (3, 2).

7. Pedal mechanism according to any of claims 1 to 6, characterised in that the two strut arms (2, 3) are connected to each other in the region of one end (7) of the pedal strut (8).

8. Pedal mechanism according to claim 7, characterised in that the two strut arms (2, 3) adjacent to the connecting region (7) thereof form with each other an acute angle.

9. Pedal mechanism according to any of claims 1 to 8, characterised in that one end (7) of the pedal strut (8) can be connected to a stationary component having the function of a system support, and the other end (10) of the pedal strut (8) can be connected to a stationary component having the function of a fixed wall.

10. Pedal mechanism according to any of claims 1 to 9, characterised in that the respective journal bearing (22, 23) is designed as a rotationally symmetrical attachment connected to one of the strut arms (2, 3), and the pedal shaft (19) which is designed as a sleeve is fitted onto the journal bearings (22, 23), and also the pedal (15) is connected non-rotatably to the pedal shaft (19).

11. Pedal mechanism according to any of claims 1 to 10, characterised in that the pedal (15 ) is suspended.

12. Pedal mechanism according to any of claims 1 to 11, characterised that in the shaped region, rigidly connected to one (3) of the strut arms (2, 3), is one end of a plate-like element (31) of which the other end is attached in frictionally locking relationship to the other strut arm (2).

## Revendications

1. Mécanisme de pédale pour véhicule, notamment mécanisme de pédale de frein ou d'embrayage pour un véhicule automobile, avec un support (8) de pédale comprenant deux branches (23) de support espacées l'une de l'autre ainsi qu'une pédale (15) qui est montée pivotante entre les deux branches de support et sur laquelle un élément d'actionnement pour un élément à commander par la pédale, notamment pour un élément de frein ou d'embrayage, agit à distance de l'axe de pivotement de la pédale, un axe de pédale (19) étant monté par ses deux extrémités (7, 10) dans des paliers d'axe (22, 23) et le support de pédale étant pourvu, dans la région de ses deux extrémités (7, 10), de moyens pour la fixation du mécanisme de pédale entre des éléments stationnaires du véhicule, caractérisé en ce que chaque branche (2, 3) de support présente une zone de déformation, les paliers d'axe (22, 23) liés aux branches (2, 3) de support étant dégagés de l'axe (19), lorsqu'une force dépassant une valeur donnée est appliquée au support (8) de pédale à travers l'un au moins des éléments stationnaires.

2. Mécanisme de pédale selon la revendication 1, caractérisé par le fait que sur chaque branche (2, 3) de support la zone de déformation est aménagée dans la région de son palier d'axe (22, 23).

3. Mécanisme de pédale selon la revendication 1 ou 2, caractérisé par le fait que la zone de déformation de chaque branche (2, 3) de support est conformée en section fléchissant librement ou en section pliant librement.

4. Mécanisme de pédale selon la revendication 3, caractérisé par le fait que chaque branche (2, 3) de support présente plusieurs points (35, 36) destinés à la flexion qui, notamment, sont disposés de part et d'autre du palier (22, 23) d'axe.

5. Mécanisme de pédale selon l'une des revendications 1 à 4, caractérisé par le fait que chaque branche (2, 3) est réalisée sous forme d'élément plat.

6. Mécanisme de pédale selon la revendication 5, caractérisé par le fait que les branches (2, 3) de support plates reçoivent entre elles l'axe (19) de pédale, chaque branche (2, 3) de support, dans la région du palier (22, 23) d'axe en vis-à-vis, s'écartant de l'autre branche (3, 2) de support.

7. Mécanisme de pédale selon l'une des revendications 1 à 6, caractérisé par le fait que les deux branches (2, 3) de support sont reliées l'une à l'autre dans la région d'une extrémité (7) du support (8) de pédale.

8. Mécanisme de pédale selon la revendication 7, caractérisé par le fait que les deux branches (2, 3) de support, dans la région (7) de leur réunion, forment un angle aigu l'une avec l'autre.

9. Mécanisme de pédale selon l'une des revendications 1 à 8, caractérisé par le fait qu'une extrémité du support (8) de pédale peut être reliée à un élément stationnaire ayant une fonction de poutre et l'autre extrémité (10) du support (8) de pédale peut être reliée à un élément stationnaire ayant une fonction de paroi fixe.

10. Mécanisme de pédale selon l'une des revendications 1 à 9, caractérisé par le fait que le palier (22, 23) d'axe concerné est conformé en bossage symétrique de rotation lié à l'une des branches (2, 3) de support, que l'axe (19) de pédale conformé en manchon est enfilé sur les paliers (22, 23) d'axe et que la pédale (15) est liée de manière rigide en rotation à l'axe (18) de pédale.

11. Mécanisme de pédale selon l'une des revendications 1 à 10, caractérisé par le fait que la pédale (15) est montée suspendue.

12. Mécanisme de pédale selon l'une des revendications 1 à 11, caractérisé par le fait que dans la zone de déformation, une extrémité d'un élément (31) en forme de plaque est liée fermement à l'une (3) des branches (2, 3) de support, l'autre extrémité étant fixée par serrage à l'autre branche (2) de support.
